# EUROPÄISCHE PATENTANMELDUNG

(11) **EP 3 098 708 A1**
(43) Veröffentlichungstag der Anmeldung: **30.11.2016**
(21) Anmeldenummer: 16171082.7
(22) Anmeldetag: 24.05.2016
(51) Int. Cl.: G06F 3/12, G06K 15/02

(54) **VERFAHREN ZUM VERARBEITEN EINES DRUCKAUFTRAGS IN EINER COMPUTERGESTÜTZTEN DRUCKVORSTUFE**

(30) Priorität: 28.05.2015 CH 7752015
(71) Anmelder: Müller Martini Holding AG, 6052 Hergiswil (CH)
(72) Erfinder: Bulgheroni, Stefan, 4806 Wikon (CH); Lutziger, Daniel, 5413 Birmenstorf (CH)

(57) **Zusammenfassung**

Die Erfindung betrifft ein Verfahren zum Verarbeiten eines Druckauftrags in einer computergestützten Druckvorstufe, bei dem der Druckauftrag eine Anzahl gleicher, jeweils mehrere unterschiedliche Seiten (A) aufweisender Druckprodukte (B) enthält, zumindest eines der Druckprodukte (B) zumindest eine Seite (A) mit zumindest einem zusätzlichen Informationselement (C) aufweist, welches sich von zumindest einem weiteren zusätzlichen Informationselement (C) zumindest einer ansonsten gleichen Seite (A) eines anderen Druckprodukts (B) unterscheidet und die Seiten (A) der Druckprodukte (B) sowie die zusätzlichen Informationselemente (C) an einen in der Druckvorstufe verwendeten Computer übermittelt werden. Dabei wird der zum Rippen erforderliche Zeitaufwand dadurch wesentlich reduziert, dass in den Druckprodukten (B) mehrfach vorkommende Seiten (A) lediglich einmal ausgeschossen und nur unterschiedliche Seiten (A) eines Druckauftrags gerippt werden. Zudem wird aus dem Druckauftrag eine digitale Arbeitsliste (F) erzeugt, welche einer die Druckprodukte (B) des Druckauftrags ausdruckenden Digitaldruckmaschine gemeinsam mit den gerippten Seiten (A) zur Verfügung gestellt wird.

## Beschreibung

Die Erfindung betrifft ein Verfahren zum Verarbeiten eines Druckauftrags in einer computergestützten Druckvorstufe, bei dem der Druckauftrag eine Anzahl gleicher, jeweils mehrere unterschiedliche Seiten aufweisender Druckprodukte enthält, bei dem zumindest eines der Druckprodukte des Druckauftrags zumindest eine Seite mit zumindest einem zusätzlichen Informationselement aufweist, welches sich von zumindest einem weiteren zusätzlichen Informationselement zumindest einer ansonsten gleichen Seite eines anderen Druckprodukts des Druckauftrags unterscheidet, bei dem die Seiten der Druckprodukte des Druckauftrags in einer computerlesbaren Seitenbeschreibungssprache und die zusätzlichen Informationselemente des Druckauftrags in einer computerlesbaren Form an einen zur Verarbeitung des Druckauftrags in der Druckvorstufe verwendeten Computer übermittelt werden.

Beim herkömmlichen Offsetdruck wird der alle Seiten eines späteren Druckprodukts enthaltende Bedruckstoff nacheinander indirekt bedruckt, d.h. die Druckfarbe wird in einem Druckwerk über mehrere Druckzylinder, d.h. ausgehend von einem Plattenzylinder über einen Gummituchzylinder, auf den Bedruckstoff übertragen. Zur Aufbringung unterschiedlicher Farben werden mehrere Druckwerke hintereinandergeschaltet. Dabei wird zunächst jeweils eine Vielzahl eines ersten Druckbogens oder einer ersten Seite mit jeweils gleichem Format und gleichem Inhalt erzeugt. Danach wird die Druckmaschine umgerüstet und wiederum eine Vielzahl eines anderen Druckbogens oder einer anderen Seite gefertigt, welche untereinander ebenfalls ein gleiches Format und einen gleichen Inhalt aufweisen. Je nach herzustellendem Druckprodukt werden weitere Druckbogen oder Seiten erzeugt und die Druckmaschine wird dazu erneut umgerüstet. Die in jeweils separaten Stapeln zwischengelagerten Druckbogen und/oder Seiten werden in einem nachfolgenden Prozessschritt in der für das Druckprodukt vorgesehenen Reihenfolge zusammengetragen, bei Bedarf auf das erforderliche Format gefalzt, anschliessend beschnitten und gebunden. Bei diesem insbesondere für grössere Stückzahlen und für Grossauflagen geeigneten Verfahren entsteht eine Vielzahl gleicher Druckprodukte welche prinzipiell der Anzahl der vorgängig erzeugten gleichen Druckbogen und/oder Seiten entspricht.

Demgegenüber kann der Bedruckstoff beim Digitaldruck basierend auf digitalen Daten unmittelbar nacheinander mit unterschiedlichen Inhalten und/oder Formaten direkt, d.h. ohne Übertrag von Druckfarbe mittels Druckzylindern, bedruckt werden. Ein zwischenzeitliches Umrüsten der Druckmaschine ist dabei nicht erforderlich. Zudem kann der Druck in der für das jeweils zu erzeugende Druckprodukt erforderlichen Seitenreihenfolge (Sequenz) erfolgen. Ein solches Druckverfahren wird daher auch als sequentielles Drucken bezeichnet. Nach dem Druck werden die Druckbogen und/oder Seiten bei Bedarf ebenfalls auf das erforderliche Format gefalzt, zusammengetragen, beschnitten und gebunden. Dieses Verfahren hat sich für Kleinserien bis hin zur Herstellung von Einzelprodukten als besonders wirtschaftlich erwiesen.

Im Zuge der Entwicklung des Digitaldrucks haben nicht nur das eigentliche Druckverfahren und die anschliessende Weiterverarbeitung der Zwischenprodukte, sondern auch die dem Drucken vorgelagerten Prozesse, die sogenannte Druckvorstufe, wesentliche Änderungen erfahren. So liegen heute die für die Herstellung eines Druckprodukts erforderlichen Daten entweder bereits als in einer computerlesbaren Seitenbeschreibungssprache vor, beispielsweise als PDF-Datei (Transportables Dokumentenformat), oder sind vorgängig in eine solche Seitenbeschreibungssprache umgewandelt worden. Dabei werden aus dem Original-Entwurf zu druckender Seiten, welche zumindest eines der Elemente Text, Grafik und Bild aufweisen, in einer computergestützten Druckvorstufe digitale Seiten bzw. digitale Druckbogen mit allen für den Druck und die nachfolgende Weiterverarbeitung erforderlichen Informationen aufgebaut. Dieses in der Regel an einem einzigen Computer-Arbeitsplatz erfolgende Zusammenfassen mehrerer Seiten zu zumindest einem Druckbogen und die Anordnung dieser Seiten auf dem Druckbogen derart, dass sie nach dem späteren Druck sowie dem Falzen und Zusammentragen in der vorgesehenen Reihenfolge aufeinanderfolgen, wird Ausschiessen genannt. Im Ergebnis dessen liegen die elektronischen Dokumente als sogenannte ausgeschossene Seiten bzw. als ausgeschossene Datei vor, beispielsweise im PDF-Format. Daran anschliessend wird jede einzelne ausgeschossene Seite in einem Raster Image Prozessor (RIP) in ein gerätespezifisches, von der Digitaldruckmaschine lesbares Datenformat (z.B. das zweidimensionale Rastergrafikformat "Windows Bitmap") übersetzt. Dieser Übersetzungsvorgang wird als "Rippen" oder auch als "Rastern" bezeichnet. Das derart erzeugte, gerätespezifische Datenformat bzw. zumindest eine dieses Datenformat enthaltende Datei löst schliesslich den jeweilige Druck der Seiten und/oder Druckbogen auf den Bedruckstoff aus (s. Handbuch der Printmedien, Springer Verlag, 2000, ISBN 3-540-66941-8, Seiten 522 ff., 561 ff., 702 ff.).

Sollen nun gemäss eines aktuellen Druckauftrags mit einem aus dem Stand der Technik bekannten Verfahren per Digitaldruck beispielsweise zehn als Bücher ausgebildete Druckprodukte mit jeweils einhundertzwanzig gleichen Seiten gedruckt werden, die sich jedoch durch zumindest jeweils ein auf einer bestimmten Seite aufgebrachtes, einen Mehrwert für der Käufer des Buches darstellendes, zusätzliches Informationselement unterscheiden, so liegen diese einhundertzwanzig Seiten zunächst einer computerlesbaren Seitenbeschreibungssprache (beispielsweise im PDF-Format) vor. Zudem wird pro herzustellendes Buch ein entsprechendes zusätzliches Informationselement, z.B. ein Strichcode, ein Text, eine Werbung oder eine Grafik, in computerlesbarer Form bereitgestellt. Mittels eines solchen beispielsweise per Internet auswertbaren, zusätzlichen Informationselements kann der Käufer beispielsweise den Zugang zu zusätzlichen Inhalten, Videos, Kursen usw. herstellen. Dabei ist es zweckmässig, wenn dieser Zugang nur einmal pro Buch zur Verfügung steht.

Aus den einhundertzwanzig Seiten und den Informationselementen wird eine aufbereitete Datei, auch expandierte Datei genannt, erzeugt, welche jedes Buch mit sämtlichen Seiten und mit dem jeweils auf der entsprechenden Seite platzierten Informationselement enthält. Die aufbereitete Datei weist somit eine Grösse von zehn Büchern x einhundertzwanzig Seiten, also von eintausendzweihundert Seiten auf. Nachfolgend werden die eintausendzweihundert Seiten der aufbereiteten Datei entsprechend des vorgesehenen Formats der Bücher und des damit im Zusammenhang stehenden Falzschemas ausgeschossen. Bei Verwendung eines sogenannten F24-Falzschemas, d.h. pro Druckbogen (jeweils mit Vorder- und Rückseite) jedes zu fertigenden Buches werden jeweils vierundzwanzig Seiten zusammengefasst, entsteht dabei eine ausgeschossene Datei mit fünfzig Druckbogen, d.h. mit einhundert ausgeschossenen Seiten.

In einem weiteren Verfahrensschritt wird die ausgeschossene Datei gerippt, d.h. deren einhundert ausgeschossene Seiten werden in das von der Digitaldruckmaschine benötigte Datenformat übersetzt. Dabei sind jedoch viele Inhalte der ausgeschossenen Datei in mehrfachen Kopien vorhanden. Da beim Rippen jede einzelne ausgeschossene Seite in das Datenformat der Digitaldruckmaschine übersetzt wird, müssen bei diesem Verfahren des Standes der Technik die gleiche Berechnungen mehrfach durchgeführt werden. Je nach Grösse des Druckauftrags und jedes einzelnen Buchs dieses Druckauftrags, je nach Art und Umfang der auf den Seiten enthaltenen Elemente (Texte, Grafiken, Bilder) und je nach dem zur Verarbeitung des Druckauftrags in der Druckvorstufe verwendeten Computer kann das Rippen jedoch sehr zeitaufwändig sein. So kann der dazu erforderliche Zeitaufwand zwischen mehreren Sekunden und etwa einer Stunde betragen. Erst nachdem zumindest ein Teil der ausgeschossenen Datei gerippt worden ist, kann der eigentliche Digitaldruck der fünfzig Druckbogen erfolgen, wobei nachgängig jeweils fünf Druckbogen zu einem Buch-block zusammengetragen und letztlich die zehn vorgesehenen Bücher gebunden werden.

Bei Digitaldruckmaschinen im Endlosbahnbereich und insbesondere bei Digital-drucksystemen mit Inline-Weiterverarbeitung der Druckbogen, d.h. bei Maschinensystemen mit denen die von der Digitaldruckmaschine erzeugten Druckbogen direkt zu Druckprodukten weiterverarbeitet werden, wie dies beispielsweise bei der digitalen Buchproduktionslinie "SigmaLine" der Anmelderin der Fall ist, kann sich das Rippen somit als limitierender Faktor für einen wirtschaftlichen Buchdruck bzw. für eine wirtschaftliche Buchproduktion erweisen.

Aufgabe der Erfindung war es daher ein Verfahren zum Verarbeiten eines Druckauftrags in einer computergestützten Druckvorstufe zu schaffen, mit dem der Teil-prozess des Rippens und damit der Digitaldruck bzw. der gesamte Prozess der Buchfertigung verkürzt werden kann.

Diese Aufgabe wird durch ein Verfahren gemäss des kennzeichnenden Teils des Anspruchs 1 gelöst. Vorteilhafte Ausführungsformen dieses Verfahrens sind Gegenstände der Unteransprüche.

Beim erfindungsgemässen Verfahren werden lediglich die Seiten eines einzigen Druckprodukts des Druckauftrags mittels des Computers ausgeschossen und auf diese Weise ausgeschossene Seiten erzeugt. Die ausgeschossenen und dabei zu zumindest einem Druckbogen zusammengefassten Seiten sind dann derart angeordnet, dass die Seiten im finalen Druckprodukt, d.h. nach dem Druck, dem späteren Falzen und Zusammentragen der Druckbogen, in der vorgesehenen Reihenfolge aufeinanderfolgen.

Danach wird zumindest eine der ausgeschossenen Seiten, welche zur Aufnahme des zumindest einen zusätzlichen Informationselements vorgesehenen ist, derart kopiert, dass nach dem Kopieren genau die zur Aufnahme der zusätzlichen Informationselemente des Druckauftrags erforderliche Anzahl ausgeschossener und kopierter Seiten vorhanden ist. Je nach Druckauftrag, d.h. je nachdem wie viele und welche Seiten der Druckprodukte zumindest ein zusätzliches Informationselement enthalten sollen, werden demnach alle ausgeschossenen und zur Aufnahme zumindest eines zusätzlichen Informationselements vorgesehenen Seiten zumindest einmal und maximal in der Anzahl der Druckprodukte des Druckauftrags kopiert.

Anschliessend werden die zusätzlichen Informationselemente in die zumindest eine zu deren Aufnahme vorgesehene, ausgeschossene und in die zumindest eine kopierte Seite eingefügt. Zudem wird aus dem Druckauftrag eine digitale Arbeitsliste erzeugt, welche eine Druckreihenfolge der ausgeschossenen und der kopierten Seiten enthält.

Danach werden die zumindest eine ausgeschossene und die zumindest eine kopierte Seite mit den darin eingefügten zusätzlichen Informationselementen sowie die weiteren, keine zusätzliche Informationselemente aufweisenden, ausgeschossenen Seiten gerippt, d.h. in ein von der Digitaldruckmaschine lesbares Datenformat übersetzt.

Schliesslich werden die gerippten Seiten und die digitale Arbeitsliste einer die Druckprodukte des Druckauftrags ausdruckenden Digitaldruckmaschine zur Verfügung gestellt.

Mit dem erfindungsgemässen Verfahren werden in einem Druckauftrag mehrfach vorkommende Seiten vorteilhaft nur einmal verarbeitet, d.h. ausgeschossen und gerippt. Im Gegensatz zum Stand der Technik müssen daher mit diesem Verfahren relativ wenige Seiten eines Druckauftrags verarbeitet werden. Auf diese Weise kann insbesondere der Teilprozess des Rippens und damit natürlich auch der Digitaldruck bzw. der gesamte Prozess der Buchfertigung deutlich verkürzt werden. Zudem kann dieses Verfahren besonders vorteilhaft ohne zusätzliche Änderungen der für das Rippen zuständigen Hard- und Software realisiert und somit ohne zusätzlichen Kosten in bereits bestehende Verfahrensabläufe zum Verarbeiten eines Druckauftrags in einer computergestützten Druckvorstufe integriert werden.

In einer Ausgestaltungsform des erfindungsgemässen Verfahrens werden die Seiten der Druckprodukte und die zusätzlichen Informationselemente des Druckauftrags dem Computer je nach dem konkreten Anwendungsfall entweder in separaten Eingangsdateien oder in einer gemeinsamen Eingangsdatei übermittelt. Bei Verwendung separater Eingangsdateien können sowohl für die Seiten der Druckprodukte als auch für die zusätzlichen Informationselemente jeweils eine oder auch jeweils mehrere Eingangsdateien eingesetzt werden.

In einer weiteren Ausgestaltungsform des erfindungsgemässen Verfahrens wird als computerlesbare Seitenbeschreibungssprache ein PDF-Format verwendet. Damit können diese Datensätze vorteilhaft in einem standardisierten Datenformat abgebildet werden.

In einer weiteren Ausgestaltungsform des erfindungsgemässen Verfahrens werden die zusätzlichen Informationselemente vorteilhaft aus zumindest einer elektronischen Datenbank und/oder aus zumindest einer Datei an den in der Druckvorstufe verwendeten Computer übermittelt. Dabei erfolgt die Auswahl zwischen diesen beiden Alternativen entsprechend des konkreten Anwendungsfalls.

In einer weiteren Ausgestaltungsform des erfindungsgemässen Verfahrens wird die digitale Arbeitsliste bei einem Druckauftrag mit einer Anzahl von zusätzlichen gleichen Druckprodukten, welche jeweils zumindest ein identisches zusätzliches Informationselement wie zumindest eines der gleichen Druckprodukte aufweisen, um die Anzahl dieser zusätzlichen gleichen Druckprodukte ergänzt. In diesem Fall enthält die digitale Arbeitsliste also zusätzlich zur Druckreihenfolge der ausgeschossenen und der kopierten Seiten auch noch die Anzahl gleicher Druckprodukte mit identischen zusätzlichen Informationselementen. Damit können vorteilhaft auch solche Druckaufträge mit einem gegenüber dem Stand der Technik deutlich geringeren Aufwand realisiert werden, welche eine Anzahl gleicher Druckprodukte mit jeweils unterschiedlichen Informationselementen und zudem eine beliebige Anzahl ebenfalls gleicher Druckprodukte mit jeweils zumindest einem zu den gleichen Druckprodukten identischen Informationselement aufweisen.

Nachfolgend wird die Erfindung anhand eines Ausführungsbeispiels näher beschrieben. Dabei zeigen:
- Fig. 1: eine erste Eingangsdatei mit den Seiten des aktuellen Druckauftrags,
- Fig. 2: eine zweite Eingangsdatei mit den unterschiedlichen Informationselementen des aktuellen Druckauftrags,
- Fig. 3: eine dritte Datei mit ausgeschossenen Seiten des aktuellen Druckauftrags,
- Fig. 4: eine modifizierte dritte Datei mit den ausgeschossenen und kopierten Seiten sowie den darin eingefügten Informationselementen,
- Fig. 5: eine digitale Arbeitsliste mit Zuordnung der Informationen aus der modifizierten dritten Datei zu den jeweils herzustellenden Druckprodukten,
- Fig. 6: eine aufgrund der Arbeitsliste abzuarbeitende Druckreihenfolge der Druckprodukte.

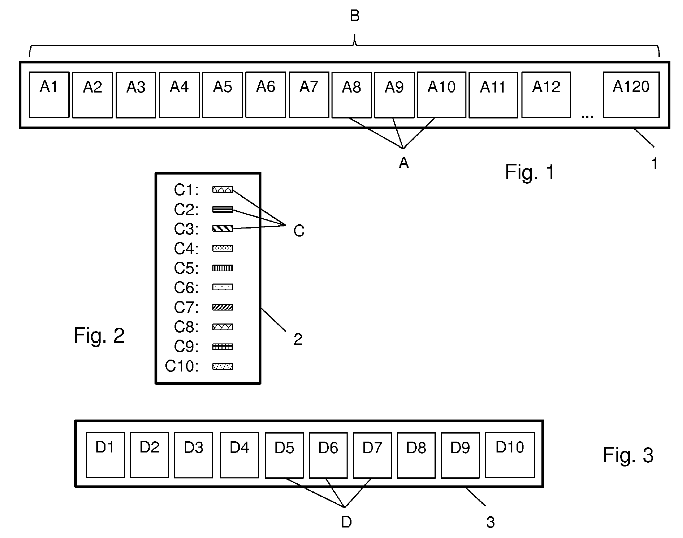

Analog des in der Beschreibung des Standes der Technik angegebenen Beispiels sollen gemäss eines Druckauftrags per Digitaldruck beispielsweise zehn als Bücher ausgebildete Druckprodukte B mit jeweils einhundertzwanzig gleichen Seiten A gedruckt werden (Fig. 1). Jedes Druckprodukt B dieses Druckauftrags soll eine Seite A mit einem zusätzlichen Informationselement C (Fig. 2) aufweisen, welches sich von den Informationselementen C der anderen Druckprodukte B des Druckauftrags unterscheidet. Dabei kann das zusätzliche Informationselement C bei jedem Druckprodukt B auf der gleichen Seite A oder auch auf unterschiedlichen Seiten A angebracht werden, wobei jedoch jeweils zumindest zwei zusätzliche Informationselemente C auf der gleichen Seite eines anderen Druckprodukts B vorgesehen sind. Alternativ dazu können natürlich auch nur einige Druckprodukte B, zumindest jedoch zwei Druckprodukte B des Druckauftrags eine solche Seite A mit einem zusätzlichen Informationselement C aufweisen. Ebenso können pro Druckprodukt B auch mehrere Seiten A mit einem zusätzlichen Informationselement C versehen werden oder es kann Seiten A mit mehr als einem Informationselement C geben.

Gemäss des vorstehend beschriebenen Druckauftrags für zehn Druckprodukte B1 ... B10 liegen einem in der Druckvorstufe zur Verarbeitung des Druckauftrags verwendeten Computer einhundertzwanzig Seiten A1 ... A120 (Fig. 1) in einer computerlesbaren Seitenbeschreibungssprache, beispielsweise im PDF-Format, sowie zehn unterschiedliche Informationselemente C1 ... C10 (Fig. 2) in einer computerlesbaren Form vor, wobei die Informationselemente C1 ... C10 jeweils auf der gleichen Seite der Druckprodukte B1 ... B10 angebracht werden sollen. Dabei können sowohl die einhundertzwanzig Seiten A1 ... A120 als auch die zehn Informationselemente C1 ... C10 in zumindest jeweils einer separaten Eingangsdatei 1, 2 (Fig. 1, Fig. 2) oder auch in einer gemeinsamen Eingangsdatei gespeichert sein.

Die einhundertzwanzig Seiten A1 ... A120 werden mittels des in der Druckvorstufe verwendeten Computers entsprechend des vorgesehenen Formats der Druckprodukte B1 ... B10 und des damit im Zusammenhang stehenden Falzschemas ausgeschossen. Bei gleichfalls erfolgender Verwendung eines F24-Falzschemas, wird dabei eine dritte Datei 3 mit fünf Druckbogen, d.h. mit zehn ausgeschossenen Seiten D1 ... D10 erzeugt (Fig. 3).

Gemäss des vorliegenden Druckauftrags wird danach nur die ausgeschossene Seite D1 neunmal kopiert, welche zur Aufnahme unterschiedlicher Inhalte, d.h. zur Aufnahme eines der Informationselemente C1 ... C10 vorgesehen ist. Die restlichen Seiten D2 ... D10 aller zehn Druckprodukte B1 ... B10 des Druckauftrags sind identisch. Nach dem Kopieren weist die dritte Datei 3 somit die nachfolgend angegebenen neunzehn Seiten auf:
- die eine zum Kopieren verwendete, ausgeschossene Seite D1, welche nachfolgend mit D1.1 bezeichnet ist,
- neun mit D1.2 ... D1.10 bezeichnete Kopien der ausgeschossenen Seite D1.1,
- die restlichen neun ausgeschossen Seiten D2 ... D10.

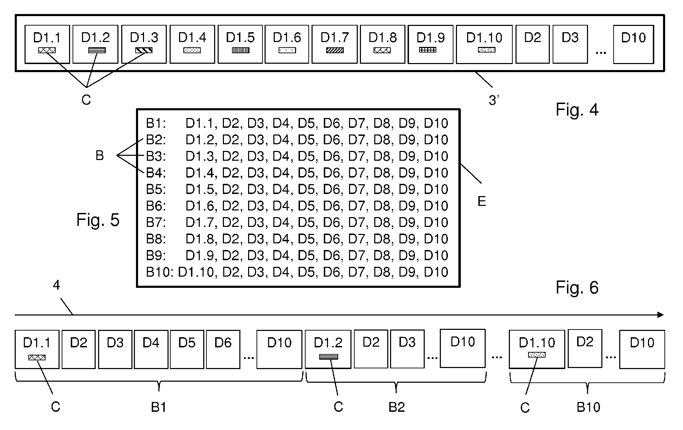

Auf die kopierten Seiten D1.2 ... D1.10 sowie auf die als Kopiervorlage dienende, ausgeschossene Seite D1.1 wird anschliessend jeweils das erforderliche Informationselement C1 ... C10 aufgebracht (Fig. 4). Die auf diese Weise modifizierte dritte Datei 3' bzw. deren neunzehn Seiten D1.1 ... D1.10 und D2 .. D10 werden anschliessend gerippt.

Im Wesentlichen parallel zum Ausschiessen oder zum Rippen aber spätestens nach dem Rippen wird aus dem Druckauftrag eine digitale Arbeitsliste E erzeugt (Fig. 5), welche die vorgesehene Druckreihenfolge der Seiten A jedes Druckprodukts B1 ... B10 des Druckauftrags enthält. Die gerippten neunzehn Seiten und die digitale Arbeitsliste E werden schliesslich einer den Druckauftrag abarbeitenden, d.h. die Seiten A1 ... A120 der Druckprodukte B1 ... B10 ausdruckenden Digitaldruckmaschine zur Verfügung gestellt. Die Druckreihenfolge der nacheinander zu druckenden Seiten D1.1 ... D10, D1.2 ... D10, bis D1.10 ... D10 der zehn Druckprodukte B1 ... B10 des aktuellen Druckauftrags ist in Fig. 6 anhand des Pfeils 4 dargestellt. Natürlich kann der Druck auch in umgekehrter oder in einer anderen Reihenfolge durchgeführt werden.

Je nach Druckauftrag kann sich natürlich eine andere Anzahl zu kopierender ausgeschossener Seiten und damit von zum Rippen vorgesehener Seiten der modifizierten dritten Datei 3' ergeben. Allgemein kann jedoch gesagt werden, dass alle ausgeschossenen und zur Aufnahme zumindest eines zusätzlichen Informationselements vorgesehenen Seiten D zumindest einmal und maximal in der Anzahl der Druckprodukte B des Druckauftrags kopiert und nach Einfügen der entsprechenden Informationselemente C gerippt werden.

Gegenüber dem eingangs beschriebenen Verfahren des Standes der Technik, bei dem einhundert Seiten gerippt werden müssen, sind mit dem beispielhaft beschriebenen erfindungsgemässen Verfahren lediglich neunzehn Seiten zu rippen. Damit kann die erforderliche Prozessdauer für den Teilprozess des Rippens bei diesem Verfahren vorteilhaft auf etwa 20% gesenkt werden.

Liegt beispielsweise ein Druckauftrag vor, bei dem neben einer ersten Anzahl gleicher Druckprodukte B mit jeweils zumindest einem unterschiedlichen zusätzlichen Informationselement C auch eine zweite Anzahl gleicher Druckprodukte B' mit einem zusätzlichen Identifikationselement C gedruckt werden soll, welches identisch mit zumindest einem der zusätzlichen Informationselemente C der gleichen Druckprodukte B ist, wird die digitale Arbeitsliste E lediglich um die zweite Anzahl dieser zusätzlichen gleichen Druckprodukte B' ergänzt. Auf diese Weise können auch solche Druckaufträge mit verhältnismässig geringem Aufwand realisiert werden.

## Patentansprüche

1. Verfahren zum Verarbeiten eines Druckauftrags in einer computergestützten Druckvorstufe, bei dem der Druckauftrag eine Anzahl gleicher, jeweils mehrere unterschiedliche Seiten (A) aufweisender Druckprodukte (B) enthält, bei dem zumindest eines der Druckprodukte (B) des Druckauftrags zumindest eine Seite (A) mit zumindest einem zusätzlichen Informationselement (C) aufweist, welches sich von zumindest einem weiteren zusätzlichen Informationselement (C) zumindest einer ansonsten gleichen Seite (A) eines anderen Druckprodukts (B) des Druckauftrags unterscheidet, bei dem die Seiten (A) der Druckprodukte (B) des Druckauftrags in einer computerlesbaren Seitenbeschreibungssprache und die zusätzlichen Informationselemente (C) des Druckauftrags in einer computerlesbaren Form an einen zur Verarbeitung des Druckauftrags in der Druckvorstufe verwendeten Computer übermittelt werden, **dadurch gekennzeichnet, dass**
• lediglich die Seiten (A) eines Druckprodukts (B) des Druckauftrags mittels des Computers ausgeschossen und dabei ausgeschossene Seiten (D) erzeugt werden,
• zumindest eine der ausgeschossenen und zur Aufnahme des zumindest einen zusätzlichen Informationselements (C) vorgesehenen Seiten (D) derart kopiert wird, dass nach dem Kopieren genau die zur Aufnahme der zusätzlichen Informationselemente (C) des Druckauftrags erforderliche Anzahl ausgeschossener und kopierter Seiten (D) vorhanden ist,
• die zusätzlichen Informationselemente (C) in die zumindest eine zu deren Aufnahme vorgesehene, ausgeschossene und in die zumindest eine kopierte Seite (D) eingefügt werden,
• aus dem Druckauftrag eine digitale Arbeitsliste (E) erzeugt wird, welche eine Druckreihenfolge der ausgeschossenen und der kopierten Seiten (D) enthält,
• die zumindest eine ausgeschossene und die zumindest eine kopierte Seite (D) mit den darin eingefügten zusätzlichen Informationselementen (C) sowie die weiteren, keine zusätzliche Informationselemente aufweisenden, ausgeschossenen Seiten (D) gerippt werden,
• die gerippten Seiten und die digitale Arbeitsliste (E) einer die Druckprodukte (B) des Druckauftrags ausdruckenden Digitaldruckmaschine zur Verfügung gestellt werden.

2. Verfahren nach Anspruch 1, **dadurch gekennzeichnet, dass** die Seiten (A) der Druckprodukte (B) und die zusätzlichen Informationselemente (C) des Druckauftrags dem Computer in separaten Eingangsdateien (1, 2) oder in einer gemeinsamen Eingangsdatei übermittelt werden.

3. Verfahren nach Anspruch 1 oder 2, **dadurch gekennzeichnet, dass** als computerlesbare Seitenbeschreibungssprache ein PDF-Format verwendet wird.

4. Verfahren nach einem der Ansprüche 1 bis 3, **dadurch gekennzeichnet, dass** die zusätzlichen Informationselemente (C) aus zumindest einer elektronischen Datenbank und/oder zumindest einer Datei an den in der Druckvorstufe verwendeten Computer übermittelt werden.

5. Verfahren nach einem der Ansprüche 1 bis 4, **dadurch gekennzeichnet, dass** bei einem Druckauftrag mit einer Anzahl von zusätzlichen gleichen Druckprodukten (B'), welche jeweils zumindest ein identisches zusätzliches Informationselement (C) wie zumindest eines der gleichen Druckprodukte (B) aufweisen, die digitale Arbeitsliste (E) um die Anzahl dieser zusätzlichen gleichen Druckprodukte (B') ergänzt wird.
